# EUROPEAN PATENT APPLICATION

(11) **EP 1 950 920 A1**
(43) Date of publication of application: **30.07.2008**
(21) Application number: 08155546.8
(22) Date of filing: 09.04.1999
(51) Int. Cl.: H04L 12/56, H04L 29/06

(54) **Method and apparatus for providing guaranteed quality of service in a local or wide area network**

(30) Priority: 14.04.1998 US 60520
(62) Divisional of application: 99917386.7
(71) Applicant: Corps of Discovery Patent Holding LLC, Bellevue, WA 98005 (US)
(72) Inventor: Golden, Michael E., Pleasanton, California 94588 (US); Rundquist, William A., Fremont, California 94536 (US); Shulman, Kenneth A., Livingston, New Jersey 07039 (US)
(74) Representative: Bebbington, Nicholas Paul

(57) **Abstract**

A method and apparatus for adapting existing packet-switched LAN infrastructures (e.g. packet-switched Ethernet) so as to be able to provide reserved-bandwidth virtual-circuit switching services in addition to their conventional capabilities. A centralized control point is incorporated within the infrastructure, preferably via a firmware upgrade to an existing enterprise-class switch, that maintains a map of paths between endstations in the network, as well as the bandwidth capabilities of all links and switches along the paths. When a virtual circuit connection between endstations is requested, the centralized control point determines whether the requested bandwidth is available all along the path. If so, the resources along the path are reserved for the connection. Existing switches in the LAN infrastructure are adapted to give priority to packets belonging to the connection, thereby providing the desired QoS for that connection.

## Description

### BACKGROUND OF THE INVENTION

### 1. Field of the Invention

The present invention relates to a method and apparatus for providing guaranteed quality of service (QoS) in a local or wide area network, and more particularly, to a technique for adapting an existing packet-switched infrastructure so that on-demand reserved-bandwidth virtual circuit connections with guaranteed QoS between any endstations in the network can be established.

### 2. Description of the Related Art

Certain standard and proposed standards are known collectively in the art as H.323 "umbrella" standards. These standards propose methods for managing multimedia "connections" between endpoints and through network elements on IP networks. These standards define a method for managing certain classes of switched connections of varying bandwidth and levels of quality-of-service across IP networks. However, H.323 does not of itself define or provide any mechanism that will cause existing switches within a packet-switched Ethernet network to be able to provide reserved-bandwidth switched virtual circuits without hardware modification of those switches.

Several conventional approaches attempt to achieve reserved-bandwidth virtual circuits across packet-switched networks. However, these approaches have notorious disadvantages. For example, Asynchronous Transfer Mode (ATM) switching has been proposed as a means of providing such reserved-bandwidth virtual circuits. However, ATM is not compatible with conventional Ethernet infrastructures, and so adapting an existing Ethernet network for ATM requires significant capital expense in deploying an entirely new switching infrastructure.

Meanwhile, simple protocol-based approaches have been suggested in the art such as resource reservation protocol (RSVP). However, such approaches require massive standards acceptance throughout the industry before large scale services can be deployed. Moreover, RSVP does not provide centralized mechanisms for accounting for and managing bandwidth utilization. Further, RSVP can not guarantee that the bandwidth requested will be maintained from end-to-end on virtual circuit connections established through multiple switches. For details regarding RSVP, see generally, R. Braden et al., RFC 2205, Network Working Group, September 1997.

What is needed in the art, therefore, is an overall solution to the above-mentioned problems. The present invention fulfills this need.

### SUMMARY OF THE INVENTION

Accordingly, an object of the present invention is to provide a means for converting existing packet-switched networks into networks that can simultaneously support both conventional packet-switched services and virtual circuit switching services with reserved bandwidth and QoS.

Another object of the present invention is to provide a means for converting existing packet-switched networks into networks that can simultaneously support both conventional packet-switched services and virtual circuit switching services solely through firmware modifications of existing switches in the networks.

Another object of the present invention is to provide a means for linking multiple switches into a virtual circuit switched network that is capable of working compatibly with, but does not require, H.323 standards for creating end-to-end switched virtual circuit connections.

Another object of the present invention is to provide a means for linking multiple switches into a virtual circuit switched network that is capable of managing guaranteed bandwidth and QoS switched circuit connections for all classes of IP traffic (e.g. UPD, TCP, FTP, http, etc.) with or without H.323 protocols or devices being involved.

Another object of the present invention is to provide a means for linking multiple switches into a virtual circuit switched network that is capable of providing gatekeeper and gateway functions for interoperating and interconnecting with other physical or virtual circuit switched networks (for all classes of IP traffic) with or without reserved bandwidth.

Another object of the present invention is to provide a means for linking multiple switches into a virtual circuit switched network that is capable of providing real-time routing services of broadband circuit requests based on available bandwidth and bandwidth priorities in specific switches that are part of a larger network.

Another object of the present invention is to provide a means for linking multiple switches into a virtual circuit switched network that is capable of providing billing, policy, settlements, security, provisioning, failure and performance management control and data, etc.

The present invention achieves these objects and others. According to one aspect, existing packet-switched LAN infrastructures (e.g. packet-switched Ethernet) are adapted so as to be able to provide reserved-bandwidth virtual-circuit switching services in addition to their conventional capabilities. A centralized control point is incorporated within the infrastructure, preferably via a firmware upgrade to an existing enterprise-class switch, that maintains a map of paths between endstations in the network, as well as the bandwidth capabilities of all links and switches along the paths. When a virtual circuit connection between endstations is requested, the centralized control point determines whether the requested bandwidth is available all along the path. If so, the resources along the path are reserved for the connection. Functional capabilities within existing switches in the LAN infrastructure are upgraded (preferably via firmware modifications) to be responsive to such reservation requests from the centralized control point and to thereafter give priority to packets belonging to the connection, thereby providing the desired QoS for that connection.

The present invention thus solves longstanding problems encountered with other conventional approaches to providing "clear channel" non-contending virtual circuit connections of arbitrary bandwidth (often described as guaranteed quality-of-service (QoS) i.e. guaranteed bit rate). Importantly, by using existing packet-switched Ethernet and/or Internet Protocol (IP) based local and/or wide area and network technologies, massive change-out of existing LAN or WAN switching or transport infrastructures is not required.

### BRIEF DESCRIPTION OF THE DRAWINGS

These and other objects and advantages of the present invention will become apparent to those skilled in the art after considering the following detailed specification, together with the accompanying drawings wherein:
Figure 1 illustrates a typical LAN infrastructure adapted for virtual circuit QoS services in accordance with the principles of the invention;
Figure 2 illustrates a signaling network in a typical LAN infrastructure adapted in accordance with the principles of the invention;
Figure 3 is a functional block diagram of an Enterprise Control Point in a LAN infrastructure such as that illustrated in Figure 1;
Figure 4 is a functional block diagram of a switch adapted for use in an upgraded LAN infrastructure such as that illustrated in Figure 1;
Figure 5 is a functional block diagram of another embodiment of a switch adapted for use in an upgraded LAN infrastructure such as that illustrated in Figure 1;
Figure 6 is a functional block diagram of an endstation adapted for use in an upgraded LAN infrastructure such as that illustrated in Figure 1;
Figure 7 illustrates an implementation of a LAN infrastructure adapted for virtual circuit connections in accordance with the principles of the invention;
Figure 8 is a functional block diagram of an endstation adapted for use in an upgraded LAN infrastructure such as that illustrated in Figure 7; and
Figure 9 illustrates several possible interoperations of a LAN adapted in accordance with the principles of the invention with other networks and infrastructures.

### DETAILED DESCRIPTION OF THE PREFERRED EMBODIMENTS

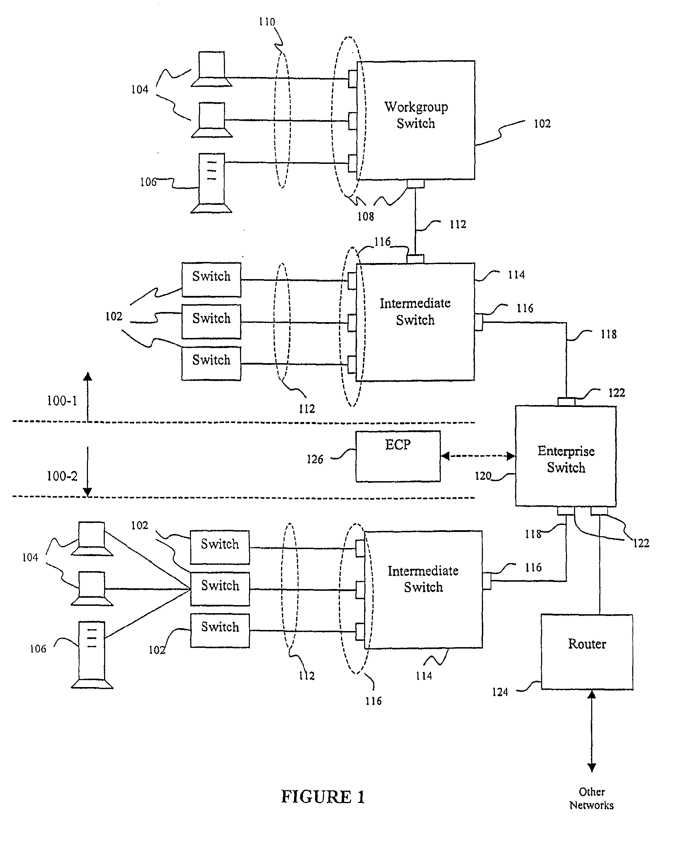

Figure 1 illustrates a typical LAN adapted for providing guaranteed QoS in accordance with the principles of the invention. Although the invention will be primarily described below with reference to a LAN infrastructure using Ethernet-based packet-switching protocols, it will be understood by those skilled in the art that the principles of the invention are easily extended to WAN infrastructures using Ethernet and/or IP-based packet switching protocols.

As shown in Figure 1, the typical LAN includes a first campus 100-1 and a second campus 100-2. Each campus 100 has a plurality of end stations connected together with links and switches. More particularly, each campus 100 includes at least one workgroup switch 102 to which are connected endstations such as workstations 104 and servers 106 via ports 108 and links 110. Workgroup switch 102 is preferably a flash memory upgradable switch such as a workgroup level Catalyst LAN switch from Cisco Corp. of San Jose, CA. Workstations 104 and servers 106 are standalone processing units having Ethernet network interface cards (NICs) such as Fast EtherLink XL or EtherLink XL NICs from 3 Com Corp. of Santa Clara, CA, for example. Links 110 are, for example, 10 Mbps Ethernet links carried over Category 3 compliant unshielded twisted-pair (UTP) cabling. Links 110 can also be fast Ethernet or Gigabit Ethernet links, depending on bandwidth needs, particularly for endstations such as servers 106.

Multiple workgroup switches 102 are connected via links 112 to intermediate switch 114 having ports 116. Intermediate switch 114 is also preferably a flash memory upgradable siwtch such as an intermediate level Catalyst LAN switch from Cisco Corp., for example.

Intermediate switches 114 are connected via uplinks 118 to enterprise switch 120, which links the campuses together. Enterprise switch 120 is an enterprise-class switch, such as enterprise level Catalyst LAN switch from Cisco Corp, for example. Enterprise switch 120 includes ports 122, one or more of which may be connected to a router 124 that connects the LAN to other networks, the Internet, etc.

The number and type of switches and campuses deployed in a given LAN depends on the number of endstations and their physical separation. Accordingly, it should be apparent that there may be only one campus and no intermediate switches or enterprise switches at all, or there may be multiple campuses and multiple intermediate switches per campus in a given LAN. The principles of the invention to apply to all of these possible configurations of existing packet-switched Ethernet-based LAN infrastructures.

Further connected to enterprise switch 120 is a centralized Enterprise Control Point (ECP) 126. Although shown separately for clarity, ECP 126 may be an operable part of enterprise switch 120. That is, ECP 126 may be a standalone processor and software that communicates with enterprise switch 120 (or, alternatively, any one of workgroup switches 102 and intermediate switches 114) as any other endstation in the LAN, or it may be incorporated into the existing functionality of enterprise switch 120 (or, alternatively, any one of workgroup switches 102 and intermediate switches 114) by a firmware upgrade, for example. Importantly, ECP 126 provides additional functionality not found in conventional packet-switched environments, which additional functionality is an aspect of the present invention that will be explained in more detail below.

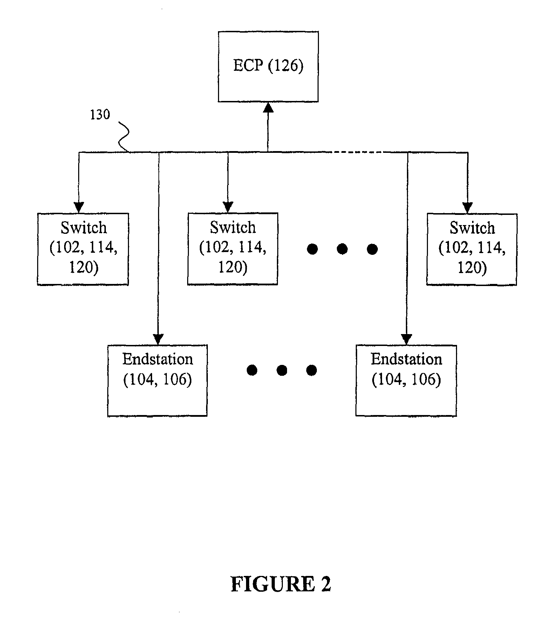

As shown in Figure 2, ECP 126 communicates individually with as many switches and endstations in the LAN as have been upgraded to support the additional functionality of the present invention. For example, upgraded ones of switches 102, 114, 120 receive bandwidth reservation requests from ECP 126 and reply to ECP 126 with acknowledgments of such requests. Likewise, upgraded ones of endstations 104, 106 send connect and disconnect requests to ECP 126, which responds with acknowledgments including grants or denials of such requests.

Communication between the upgraded network elements and ECP 126 is preferably performed via a reserved signaling channel 130. ECP 126 and each upgraded switch and endstation are programmed to send and recognize certain types of packets as special signaling packets. Such packets contain, in addition to the MAC level addresses of the communicating parties, a special predetermined identifier that can be used only by ECP 126, upgraded switches and endstations when sending signaling packets. This predetermined identifier can be a multicast address within the reserved "router" multicast group, or some kind of datagram protocol, for example. By programming each upgraded element to send and be responsive to packets having this predetermined identifier, signaling traffic can always be distinguished from other LAN traffic by the upgraded elements, thereby reserving a critical pathway through the network for signaling between them.

It should be noted that signaling channel communications regarding the guaranteed bandwidth and QoS services of the present invention could be compatible with H.323 defined standards. However, such standards need not be employed. Moreover, the present invention can extend such guaranteed bandwidth and QoS services to all classes of traffic that can be carried across the packet-switched Ethernet LAN, whether or not H.323 protocols or devices are involved.

It should be further noted that the guaranteed bandwidth and QoS services of the present invention can be extended to selected ones of, or all, endstations in a packet-switched LAN. That is, the additional functionality can be extended to as many endstations as desired, by providing an ECP and firmware upgrades or replacement switches for as many of the existing switches of the LAN as desired. Not all the switches need be upgraded, with the result, however, that the guaranteed bandwidth and QoS services of the present invention will not be extended to endstations connected to those switches. Likewise, not all endstations connected to upgraded switches need be upgraded.

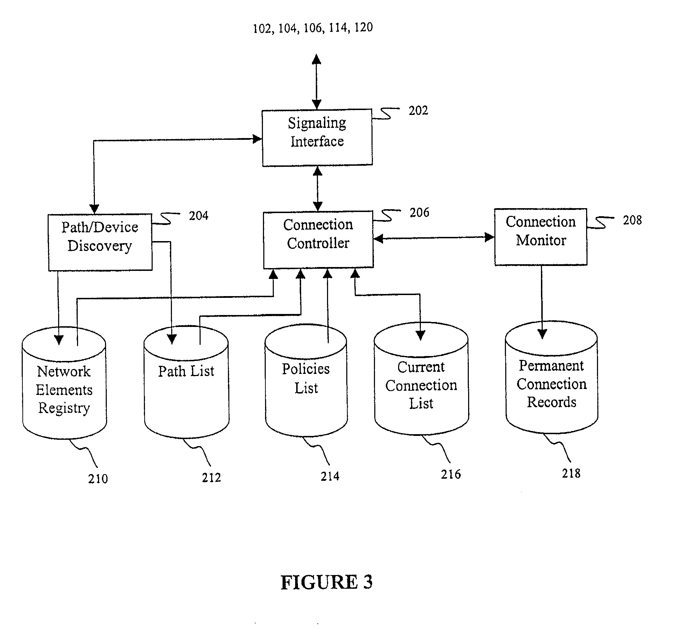

Figure 3 further illustrates the functionality provided by ECP 126. As shown, ECP 126 includes a signaling interface function 202, a path/device discovery function 204, a connection controller function 206, and a connection monitor function 208.

Signaling interface function 202 provides the ability to communicate with switches 102, 114, 120 and endstations 104, 106 via the reserved signaling channel. Signaling interface function 202 monitors for signaling packets received from switches 102, 114, 120 and endstations 104, 106 and forwards them to the appropriate function within ECP 126. Signaling interface function 202 also handles sending signaling packets to switches 102, 114, 120 and endstations 104, 106 in accordance with commands by functions within ECP 126.

Path/device discovery function 204 learns what network elements and paths exist within the LAN and maintains lists of them in network elements registry 210 and path list 212. The network elements include endstations and switches and the interfaces between them (e.g. switch ports). Information maintained by path/device discovery function 204 for each network element includes their respective MAC addresses and bandwidth capacity. Path/device discovery function 204 also maintains a list of all possible paths between each of the endstations in the LAN. The paths include each switch and each port thereof through which data packets between the endstations must pass. The list of possible paths is preferably ordered from paths having the least number of hops to those having the most. In some cases, of course, such as with endstations connected to the same switch, there will only be possible path between the endstations.

Path/device discovery function 204 can fill in the information in network elements registry 210 and path list 212 as follows. When ECP 126 is initialized, it broadcasts a signaling message requesting all upgraded switches and endstations to identify themselves (e.g. return a reply message including their MAC address). For each identified switch and endstation, ECP 126 then queries them individually to learn their configuration and/or bandwidth capacities, thus completing the information in network elements registry 210. The bandwidth capacities includes the overall bandwidth capacity of the switch or endstation, the bandwidth capacity of each switch port, and the bandwidth capacity of links between switches and/or endstations.

Path/device discovery function 204 then fills in the information in path list 212 by asking each switch to return their individual cached maps. From this information, path/device discovery function can build paths between each upgraded endstation in the LAN that is connected via a completely upgraded path in the network to another upgraded endstation.

Thereafter, path/device discovery function 204 maintains the information in network elements registry 210 and path list 212 by periodically sending queries to each identified switch and endstation. Moreover, when a new or upgraded switch or endstation is added to the network, that element can register with path/device discovery function 204.

A number of alternatives to the path/device discovery function 204 as implemented above should be noted. For example, the function can be performed by an offline process, or may be manually performed by a system administrator, with results of such offline or manual processing being stored in network elements registry 210 and path list 212. Moreover, only one path between each endstation need be stored. As a further alternative, the path can be determined at the time a request for a connection between endstations is received.

Connection controller function 206 is responsive to requests for virtual circuit connections and disconnections from endstations 104, 106 received via signaling interface function 202. In response, it causes signaling interface function 202 to send acknowledgements including grants or denials of such requests to endstations 104, 106, and issues commands to set up or tear down a bandwidth reservation to switches 102, 114, 120.

More specifically, a request for a virtual circuit connection includes the endstation making the request (e.g. its MAC address), the endstation to which a reserved connection is requested (e.g. its MAC address), and the bandwidth and/or quality of service requested. ECP 126 may include functionality for resolving logical endstation identifiers with their corresponding physical addresses within the network.

When such a request for a virtual circuit connection is received, connection controller function 206 looks up the list of available paths between the endstations of the requested connection in path list 212. It then determines the overall capacity of the path by determining whether the minimum bandwidth available through each link, switch, switch port and endstation in the path, as stored in network elements registry 210, will be sufficient to fulfill the bandwidth and/or quality of service requested for the connection. Connection controller function 206 reduces the bandwidth available through each link, switch, switch port and endstation in the path, and thus the overall capacity of the path, in accordance with bandwidth consumed by currently existing connections in connections list 216, which list is maintained by connection controller function 206 as connections are established and torn down.

The bandwidth available through each link, switch, switch port and endstation may be further reduced by rules established in policies list 214. Such rules may include preserving a certain amount of bandwidth in a link for normal network traffic, allowing certain endstations to have priority for reserved bandwidth connections over other endstations, and the like. Such rules may even be adjusted dynamically by time-of-day, etc. Policies list 214 is preferably established in advance when ECP 126 is initialized, by a system administrator for example.

If the overall capacity of the entire path is not sufficient for the bandwidth required by the requested connection, the next path in the list is checked, and on to the end of the list. If no path that can fulfill the request exists, the request is denied and a message to that effect is sent to the requesting endstation.

If an available path can provide the requested bandwidth for the connection, connection controller function 206 "rings" the requested other endstation of the connection and waits for an answer. If the endstation agrees to the connection, connection controller proceeds to establish the connection. Specifically, for the best available path that can fulfill the requested connection, connection controller function 206 sends a bandwidth reservation to each switch 102, 114, 120 in the path. The reservation includes the source and destination of the connection (e.g., the source and destination MAC addresses of the endstations), and the desired bandwidth in packets per second, for example. Connection controller function 206 then waits for an acknowledgment from each switch 102, 114, 120 to which a reservation request was sent. When all such acknowledgments are received via signaling interface function 202, connection controller function 206 issues a connection granted message to the endstations involved in the requested connection, and updates the list of existing connections in connections list 216. If a predetermined time elapses before all acknowledgments are received, connection controller function issues a connection refused message to the requesting endstation, and bandwidth release messages to each switch 102, 114, 120 to which a reservation request was sent.

When a disconnection request is received via signaling interface 202, connection controller 206 finds the connection in connections list 216, updates the list, and sends bandwidth release messages to each switch 102, 114, 120 involved in the connection, as well as a disconnection notice to the other party in the connection.

Connection monitor 208 maintains a permanent list of connections in connection records 218. Simultaneously with updating connections list 216, connection controller 206 notifies connection monitor 208 with the endstations and network elements involved in the connection and the bandwidth reserved for the connection. Based on this information, connection monitor 208 creates records that show the elapsed time of the connection, the parties involved, and the resources used. Such records can be used for billing and resource management, for example.

It should be further noted that for clarity, the above discussion has assumed only two endstation participants in a reserved virtual circuit connection. However, it should be apparent to those skilled in the art that the principles of the invention are applicable to reserved virtual circuit connections for three or more endstation participants.

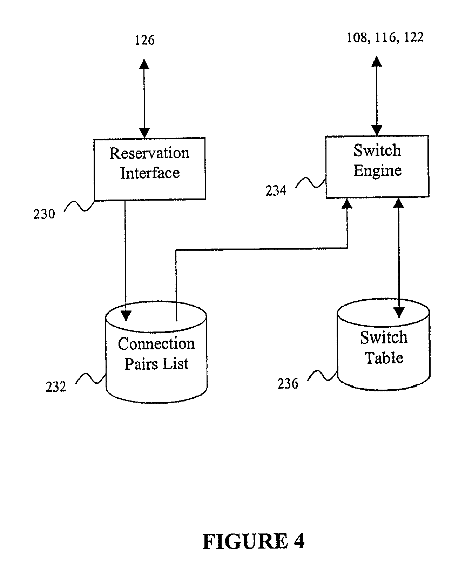

Figure 4 further illustrates the additional functionality provided in a switch 102, 114, 120 that has been upgraded in accordance with the principles of the invention. As shown, this includes reservation interface function 230 and connection pairs list 232, in addition to enhanced existing functionality provided by switch engine 234 and switch table 236.

Conventional switches include switch engine functions for forwarding packets according to conventional techniques. Such conventional techniques include maintaining a table that correlates addresses (typically MAC addresses) of endstations connected thereto with the ports by which they are connected. When a packet is received at a port of the switch, the conventional switch engine "cuts into" the packet to obtain the destination address in the packet header forwards the packet to the corresponding port for that address stored in the table. Conventional switches may also include functionality for updating the table when a packet from an unknown endstation is received, and broadcasting or forwarding up a packet with an unknown destination endstation.

Such conventional techniques must be enhanced for the switch to implement the virtual circuit services of the present invention. Accordingly, switch 102, 114, 120 includes an enhanced switch engine 234 that makes forwarding decisions based on the conventional switch table 236 as well as a new connection pairs list 232. Moreover, switch 102, 114, 120 includes additional functionality in the form of reservation interface function 230. The effect of the enhanced functionality is that switch 102, 114, 120 gives higher priority to packets belonging to reserved virtual circuit connections than to other packets contending for access to the same ports as needed by the reserved virtual circuit connections, thereby guaranteeing the desired quality of service for the connections.

Reservation interface function 230 receives bandwidth reservation requests from ECP 126 via the reserved signaling channel 130. Such requests include, for example, the MAC addresses of the endstations involved in the virtual circuit connection, as well as the desired bandwidth, in packets per second for example. Upon receipt of such a request, reservation interface function 230 stores the addresses and desired bandwidth in connection pairs list 232 and sends an acknowledgment to ECP 126. Reservation interface function 230 also receives bandwidth reservation release requests from ECP 126 containing, for example, the MAC addresses of the endstations involved in the virtual circuit connection that is to be released. Upon receipt of such a request, reservation interface function 230 deletes the information in connection pairs list 232 corresponding to the released connection and sends an acknowledgment to ECP 126.

Enhanced switch engine 234 performs its conventional functions of forwarding packets between ports of the switch in accordance with addresses in the packet headers and the contents of switch table 236. In accordance with the principles of the invention, however, enhanced switch engine 234 further compares the addresses in the packet headers with the addresses contained in the reserved connection pairs list 232. Specifically, if the source and destination addresses of an incoming packet match both addresses of one of the address pairs stored in connection pairs list 232, the packet is forwarded to the port associated with the destination address, which port is designated by switch table 236. Meanwhile, if the port designated by switch table 236 for one address of an incoming packet matches a port designated by switch table 236 for any of the stored addresses of endstations involved in a reserved virtual circuit connection, but if both addresses of the incoming packet do not match the corresponding address pair stored in connection pairs list 232, the packet is dropped (unless it is a signaling packet).

As an alternative, if the switch maintains separate port queues for priority traffic, enhanced switch engine 234 can forward reserved connection packets to high priority queues, while dropping or forwarding to lower priority queues those packets which contend for access to ports involved in reserved connections.

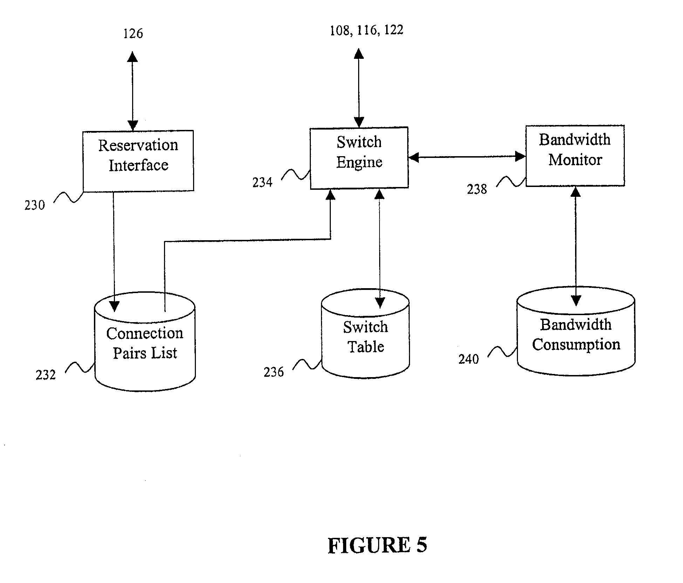

Figure 5 illustrates another embodiment of the additional functionality provided in a switch 102, 114, 120 upgraded in accordance with the principles of the invention. In this example, the upgraded switch further includes bandwidth monitor function 238 and bandwidth consumption table 240.

In this example, rather than immediately dropping packets that are contending for access to the same port reserved for access by packets belonging to an established virtual connection, additional processing is performed. Each time a packet belonging to an established virtual connection is forwarded to the appropriate port, enhanced switch engine 234 notifies bandwidth monitor function 238, which updates the actual bandwidth consumed by that connection, for example, by maintaining a count of packets forwarded in a predetermined time interval.

Bandwidth monitor function 238 also knows or has means of determining the total bandwidth capacity of each port (and/or its associated link) of the switch. When an incoming packet vies for access to a port reserved for an established virtual connection, switch engine 234 notifies bandwidth monitor function 238, which determines whether the port (and/or its associated link) has any excess bandwidth available (e.g. whether the actual bandwidth consumed by that connection is less than the total bandwidth capacity of that port and/or link by a predetermined margin). Bandwidth monitor function 238 sends the answer back to switch engine 234, which either drops or forwards the packet accordingly. Bandwidth monitor function 238 thus allows normal traffic to continue along the same path with virtual circuit connections as long as it doesn't reduce the QoS desired for the virtual circuit connection.

Moreover, bandwidth monitor function 238 could monitor the actual bandwidth consumed by each reserved virtual circuit connection versus their reserved bandwidth. If the actual bandwidth of a virtual circuit connection exceeds the bandwidth reserved, bandwidth monitor function 238 could notify enhanced switch engine 234, which could either drop further packets for that connection, or send a message via signaling channel 130 notifying ECP 126 that the reserved bandwidth is being exceeded. ECP 126 could then instruct the offending endstation(s) to throttle back on packet throughput. Likewise, bandwidth monitor function 238 could detect a condition where the reserved and/or actual bandwidth for a given connection could be increased, and cause a message to be sent to ECP 126 to that effect. If the excess capacity condition exists throughout the path, ECP 126 could instruct the participants in that connection that they can increase their throughput.

It should be noted that virtual circuit connections can be reserved based not only on the MAC addresses of the participating endstations, but also on layer 3 addresses such as IP addresses, or even protocols, thus permitting the adapted switches in the network to discriminate between network traffic attributable to different processes on the same machine. Such additional discrimination functionality would require additional processing capacity which may not be available on lower-level switches, however.

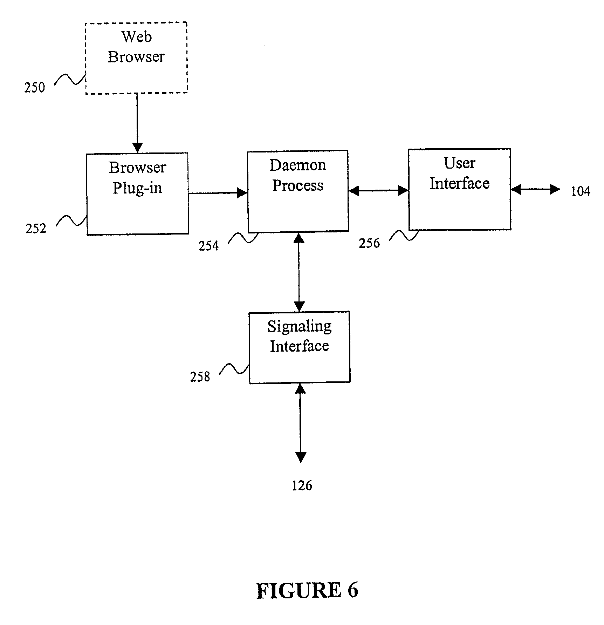

Figure 6 further illustrates one example of the software load on a workstation 104 adapted for the virtual circuit services according to the present invention. As shown, it includes a web browser 250, a browser plug-in application 252, a daemon process 254, a user interface process 256, and a signaling interface process 258. The above processes are operable within a common operating system such as Windows 95 from Microsoft Corp. of Redmond, WA, for example.

Web browser 250 is preferably a Java-capable browser such as NetScape Communicator 4.0 from NetScape Communications Corp. of Mountain View, CA, for example. Daemon process 254 provides the functionality needed to take advantage of the virtual circuit services according to the present invention, and is preferably instantiated on workstation 104 when it is powered on. User interface process 256 is responsible for responding to user inputs from I/O devices attached to workstation 104 (e.g. keyboard and mouse), and for drawing objects on a video display associated with the workstation. To enable browser 250 to handle URLs unique to the virtual circuit services of the present invention, browser 250 is configured with plug-in application 252, whose main function is to notify daemon process 254 when a virtual circuit connection is being requested from the browser. Signaling interface process 258 receives requests for participation in, or termination of, a virtual circuit connection from ECP 126 via signaling channel 130 and the workstation's NIC and forwards them to daemon process 254 upon receipt, and also sends requests for origination or termination of virtual circuit connections to ECP 126 upon command from daemon process 254.

Details regarding creating processes under a common operating system such as Windows 95 and configuring browser plug-in applications responsive to specific URLs are believed to be well understood in the art, and so such details will not be presented here so as not to obscure the invention.

When workstation 104 is powered on, daemon process 254 is instantiated and starts up signaling interface process 258. Daemon process 254 then waits for messages from either the browser 250 (via browser plug-in application 252), requesting that a virtual connection be initiated or terminated, or from signaling interface process 258, indicating that another endstation is requesting that workstation 104 participate in, or wishes to terminate a virtual circuit connection.

For example, when a user is running browser 250 and desires to originate a virtual circuit connection, a web page that contains a directory of network users is accessed and the directory is displayed in the browser window. The directory contains a list of network users, whose names are preferably shown as hypertext with links having URLs that are unique to the virtual circuit services of the present invention. When the user selects a party or parties from the list, browser 250 invokes plug-in application 252 to handle the request, and plug-in application 252 in turn notifies daemon process 254. Daemon process 254 invokes user interface process 256, which draws a dialog box asking the user to specify what kind of connection is desired (e.g., audio only, data only, teleconference, etc.). This information is returned to daemon process 254 and formatted into a connection request that is forwarded to signaling interface 258, which sends the request to ECP 126.

If the connection can not be established (e.g., not enough bandwidth available, or the other participant does not agree to the connection), ECP 126 notifies workstation 104 to that effect via signaling channel 130, which message is received by signaling interface process 258. Signaling interface process 258 forwards the message to daemon process 254, which in turn commands user interface process 256 to paint a message on the workstation display informing the user that the requested connection was refused.

If the connection can be established, ECP 126 notifies workstation 104 to that effect via signaling channel 130, which message is received by signaling interface process 258. Signaling interface process 258 forwards the message to daemon process 254, which in turn commands user interface process 256 to paint a message on the workstation display informing the user that the requested connection was granted. Additional functionality can also be built in to launch an application desired for that connection (such as a video or audio conference). User interface process 258 can also paint an action box on the screen that permits the user to terminate the connection when desired. When such an action is desired by the user, the answer is collected by user interface process 256 via user I/O devices and relayed to the daemon process 254. Daemon process 254 then formats an answer message which is sent to ECP 126 via signaling interface process 258 and signaling channel 130.

Meanwhile, for connection requests sent to workstation 104 from another network endstation, these are received by daemon process 254 via signaling interface process 258. When such requests are received, daemon process 254 activates user interface process 256, which in turn paints a dialog box on the workstation's video display, querying the user whether to participate in the connection. The answer is collected by user interface process 256 via user I/O devices and relayed to the daemon process 254. Daemon process 254 then formats an answer message which is sent to ECP 126 via signaling interface process 258. Similar processing is performed for connection termination requests from other endstations.

Although the process of requesting a virtual circuit connection has been described above with reference to the example of a user interface process interacting with a user to select a type of connection, it should be apparent that many alternatives are possible. For example, additional layers of software can be built into applications that automatically request a connection, determine the type of connection to be made, and how much bandwidth and what quality of service to request for such connection.

Furthermore, the process of responding to requests for connections can be entirely automatic, as could be the case in an endstation such as server 106. That is, no user interaction need be required to respond to requests from network users to log onto or access information from server 106. Accordingly, the software load on such endstations could be limited to a daemon process such as 254 and a signaling interface process such as 258.

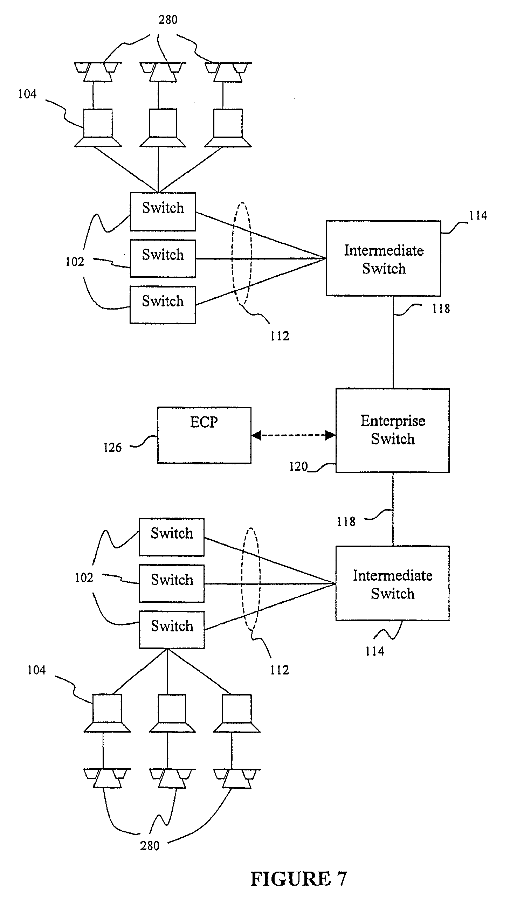

One possible implementation of an existing network adapted in accordance with the principles of the invention will now be described with reference to Figure 7. In the adapted network as shown, endstations such as workstations 104 are connected to workgroup switches 102 by existing cabling. Several workgroup switches 102 are connected to intermediate switches 114 by links 112, and intermediate switches 114 are connected to enterprise switch 120 by links 118.

In this implementation, ECP 126 provides functionality akin to a private branch exchange (PBX) in a local office ISDN. As further shown in Figure 7, one or more workstations 104 are configured with telephones 280. To support this configuration, workstations 104 must include a NIC that has a telephone interface. A virtue of this implementation is that it adds local office telephony within an existing LAN infrastructure without requiring additional cabling or a costly PBX or central office exchange service (Centrex).

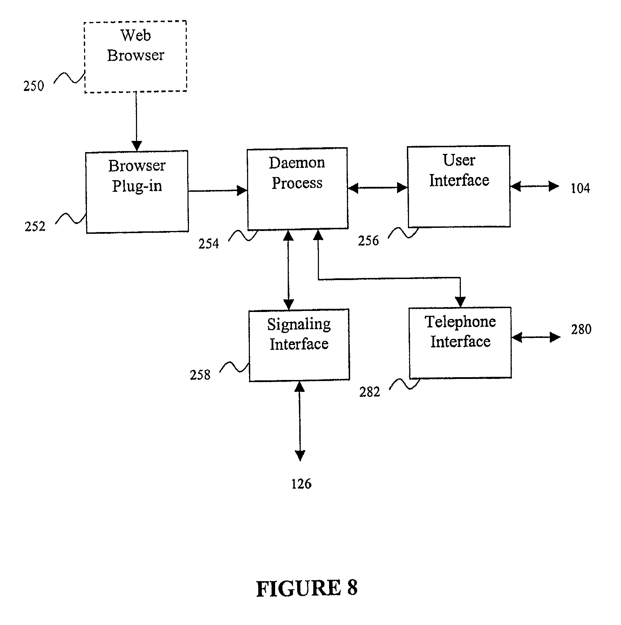

As shown in Figure 8, to support telephony applications, workstations 104 further include, in addition to the enhanced functionality discussed with reference to Figure 6, a telephone interface process 282. Telephone interface function 282 monitors when a user enters a number to dial, and alerts daemon process 254 when a number is dialed. In response, daemon process 254 formats a message to send to ECP 126 via signaling interface process 258 and signaling channel 130. Such a message may be in accordance with standard dialing protocols such as Q.931, for example. Telephone interface 282 also performs, in response to commands from daemon process 254 according to messages received from ECP 126, such standard telephone functions as ring and busy signals.

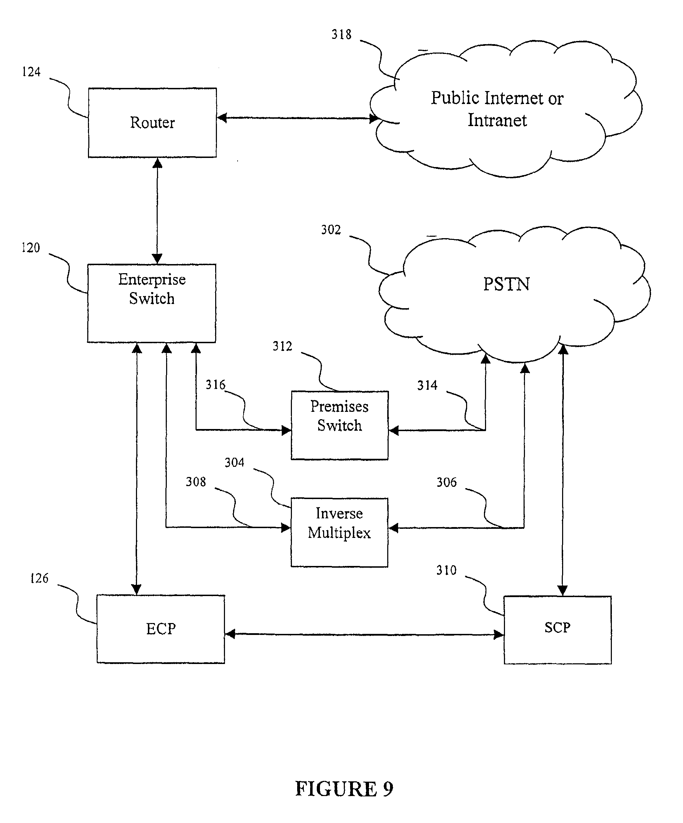

Several possible interoperations of an existing network adapted in accordance with the principles of the invention with other types of networks and infrastructures will now be described with reference to Figure 9.

As shown in Figure 9, one possible interoperation is to provide access to connections in a public switched telephone network (PSTN) 302, for example, ISDN. This extends the virtual circuit connections from upgraded endstations within the LAN to wide area endpoints accessible to PSTN 302. There are several alternative ways to do this.

As a first alternative, inverse multiplexor 304 is provided to de-multiplex trunk (e.g. T1) lines306 from PSTN 302 to individual channels 308 that are attached to packet-switched ports of enterprise switch 120. Such inverse multiplexors are well known in the art. ECP 126 is further provided with functionality whereby it can "dial-up" circuit connections over PSTN 302 in response to requests from endstations within the LAN. Once a connection is established, packets belonging to the connection are passed from the requesting endstation within the LAN to PSTN 302 via enterprise switch 120 and inverse multiplexor 304.

As a next alternative, such virtual switched circuit connections can also be handed off to PSTN 302 by equipping ECP 126 to inter-operate and communicate over Signaling System 7 or similar signaling networks, well known in the art, to established Service Control Points (SCPs) 310 within PSTN 302 to manage the end-to-end setup of circuit switched connections through the ISDN PSTN. This approach is, of course, normally limited to connections having a bandwidth of one or two bearer channels.

Another possible interoperation of a LAN adapted for virtual circuit connections in accordance with the invention is with on-demand broadband connections such as that described in U.S. Patent Application No. 08/966,634, the contents of which are incorporated herein by reference. In this case, a premises switch 312 such as that described in the afore-mentioned application is further provided for managing the aggregation of bandwidth necessary for a virtual circuit connection within the LAN. Specifically, premises switch 312 controls the aggregation of bandwidth across multiple individual channels 316 connected to enterprise switch 120, which bandwidth is obtained from trunk lines (e.g. T1 lines) 314. The virtual circuit connection from an endstation within the LAN becomes a reserved connection in PSTN 302 via the control of a Network Control System Server (NCSS) such as that described in the afore-mentioned application. ECP 126 is further provided with additional functionality for communicating with the NCSS to establish reserved connections of arbitrary bandwidth from endstations within the LAN, across switched WAN connections, to another endstation on another LAN.

Yet another possible interoperation of a LAN adapted for virtual circuit connections in accordance with the invention is with IP connections via the Public Internet or Intranet 318 and existing router 124. Such connections can include IP telephony or other virtual circuit connections. Such connections can also include those compatible with RSVP or other reserved circuit protocols.

Although the present invention has been described in detail with reference to the preferred embodiments thereof, those skilled in the art will appreciate that various substitutions and modifications can be made to the examples described herein while remaining within the spirit and scope of the invention as defined in the appended claims.

The following numbered clauses on pages 15 to 27 of the present description correspond to the claims of European patent application no. 99917386.7 as filed. The claims of the present application as filed, which is divided from European patent application no. 99917386.7, can be found on the subsequent pages 28 to 31 of the specification which begin with the heading "CLAIMS".
1. An apparatus for establishing a reserved connection between first and second endstations in a network, said apparatus comprising:
   means for identifying a path between said first and second endstations, said path including at least one switch having a first port in packet communication with said first endstation and a second port in packet communication with said second endstation; and
   means for causing said at least one switch to forward packets belonging to said reserved connection between said first and second ports along said path with higher priority than packets not belonging to said reserved connection.
2. An apparatus as defined in claim 1, wherein said reserved connection has a required bandwidth, said apparatus further comprising:
   means for determining a capacity of said path; and
   means for refusing said reserved connection if said capacity is less than said required bandwidth.
3. An apparatus as defined in claim 2, said apparatus further establishing a second reserved connection between third and fourth endstations in said network, said second reserved connection having a second required bandwidth, at least one of said third and fourth endstations being in packet communication with a common one of said first and second ports of said at least one switch, a second path between said third and fourth endstations including said at least one switch, said apparatus further comprising:
   means for identifying said second path;
   means for determining a second capacity of said second path;
   means for reducing said second capacity in accordance with said required bandwidth of said reserved connection; and
   means for refusing said second reserved connection if said reduced second capacity is less than said second required bandwidth.
4. An apparatus as defined in claim 2, further comprising:
   means for reducing said capacity in accordance with rules established for said network.
5. An apparatus as defined in claim 1, further comprising:
   means for signaling messages concerning said reserved connection, said messages including a predetermined identifier to distinguish said messages from other network traffic, said signaling means being coupled to said first and second endstations and said at least one switch.
6. An apparatus as defined in claim 5, further comprising:
   means for receiving a connection request message from one of said first and second endstations via said signaling means, said path identifying means being responsive to said connection request message;
   means for sending a reservation message to said at least one switch via said signaling means in accordance with said path identified by said path identifying means.
7. An apparatus as defined in claim 2, further comprising:
   means for signaling messages concerning said reserved connection, said messages including a predetermined identifier to distinguish said messages from other network traffic, said signaling means being coupled to said first and second endstations and said at least one switch;
   means for receiving a connection request message from one of said first and second endstations via said signaling means, said path identifying means and said capacity determining means being responsive to said connection request message;
   means for sending a reservation message to said at least one switch via said signaling means in accordance with said path identified by said path identifying means; and
   means for sending a connection refused message to said one of said first and second endstations via said signaling means responsive to said connection refusing means.
8. An apparatus as defined in claim 1, further comprising:
   means for monitoring said reserved connection, said monitoring means including means for permanently recording details concerning said reserved connection.
9. An apparatus as defined in claim 8, wherein said details include one or more of an endstation identifier of one or both of said first and second endstations, a switch identifier of said at least one switch, a bandwidth of said reserved connection, and an elapsed time of said reserved connection.
10. An apparatus as defined in claim 1, wherein said at least one switch includes:
   means for determining whether incoming packets belong to said reserved connection; and
   means for forwarding incoming packets between said first and second ports in accordance with said determination.
11. An apparatus as defined in claim 10, wherein said at least one switch further includes:
   means for dropping incoming packets that do not belong to said reserved connection in accordance with said determination.
12. An apparatus as defined in claim 1, wherein said at least one switch includes:
   means for monitoring an actual bandwidth consumed by said reserved connection.
13. An apparatus as defined in claim 12, wherein said at least one switch further includes:
   means for permitting packets not belonging to said reserved connection to be forwarded between said first and second ports if said actual bandwidth is less than a bandwidth capacity associated with said first and second ports by a predetermined margin.
14. An apparatus as defined in claim 10, wherein said at least one switch further includes:
   means for monitoring an actual bandwidth consumed by said reserved connection.
15. An apparatus as defined in claim 14, wherein said at least one switch further includes:
   means for permitting packets not belonging to said reserved connection to be forwarded between said first and second ports if said actual bandwidth is less than a bandwidth capacity associated with said first and second ports by a predetermined margin.
16. An apparatus as defined in claim 14, wherein said at least one switch further includes:
   means for alerting said forwarding means if said actual bandwidth is greater than a reserved bandwidth of said reserved connection, said forwarding means forwarding packets belonging to said reserved connection between said first and second ports in further accordance with said alert.
17. An apparatus as defined in claim 6, wherein said at least one switch includes:
   means for determining whether incoming packets belong to said reserved connection in accordance with said reservation message; and
   means for forwarding incoming packets between said first and second ports in accordance with said determination.
18. An apparatus as defined in claim 5, wherein at least one of said first and second endstations includes:
   means for sending said connection request message via said signaling means.
19. A method for establishing a reserved connection between first and second endstations in a network, said apparatus comprising:
   identifying a path between said first and second endstations, said path including at least one switch having a first port in packet communication with said first endstation and a second port in packet communication with said second endstation; and
   causing said at least one switch to forward packets belonging to said reserved connection between said first and second ports along said path with higher priority than packets not belonging to said reserved connection.
20. A method as defined in claim 19, wherein said reserved connection has a required bandwidth, said method further comprising:
   determining a capacity of said path; and
   refusing said reserved connection if said capacity is less than said required bandwidth.
21. A method as defined in claim 20, said method further establishing a second reserved connection between third and fourth endstations in said network, said second reserved connection having a second required bandwidth, at least one of said third and fourth endstations being in packet communication with a common one of said first and second ports of said at least one switch, a second path between said third and fourth endstations including said at least one switch, said method further comprising:
   identifying said second path;
   determining a second capacity of said second path;
   reducing said second capacity in accordance with said required bandwidth of said reserved connection; and
   refusing said second reserved connection if said reduced second capacity is less than said second required bandwidth.
22. A method as defined in claim 20, further comprising:
   reducing said capacity in accordance with rules established for said network.
23. A method as defined in claim 19, further comprising:
   signaling messages concerning said reserved connection to said first and second endstations and said at least one switch, said messages including a predetermined identifier to distinguish said messages from other network traffic.
24. A method as defined in claim 23, further comprising:
   receiving a connection request message from one of said first and second endstations, said path identifying step being responsive to said connection request message;
   sending a reservation message to said at least one switch via said signaling means in accordance with said path identified in said path identifying step.
25. A method as defined in claim 20, further comprising:
   signaling messages concerning said reserved connection to said first and second endstations and said at least one switch, said messages including a predetermined identifier to distinguish said messages from other network traffic;
   receiving a connection request message from one of said first and second endstations, said path identifying step and said capacity determining step being responsive to said connection request message;
   sending a reservation message to said at least one switch in accordance with said path identified in said path identifying step; and
   sending a connection refused message to said one of said first and second endstations responsive to said connection refusing step.
26. A method as defined in claim 19, further comprising:
   monitoring said reserved connection, said monitoring step including means for permanently recording details concerning said reserved connection.
27. A method as defined in claim 26, wherein said details include one or more of an endstation identifier of one or both of said first and second endstations, a switch identifier of said at least one switch, a bandwidth of said reserved connection, and an elapsed time of said reserved connection.
28. A method as defined in claim 19, further comprising:
   determining whether incoming packets to said at least one switch belong to said reserved connection; and
   forwarding said incoming packets between said first and second ports of said at least one switch in accordance with said determination.
29. A method as defined in claim 28, further comprising:
   dropping said incoming packets that do not belong to said reserved connection in accordance with said determination.
30. A method as defined in claim 19, further comprising:
   monitoring an actual bandwidth consumed by said reserved connection.
31. A method as defined in claim 30, further comprising:
   permitting packets not belonging to said reserved connection to be forwarded between said first and second ports of said at least one switch if said actual bandwidth is less than a bandwidth capacity associated with said first and second ports by a predetermined margin.
32. A method as defined in claim 28, further comprising:
   monitoring an actual bandwidth consumed by said reserved connection.
33. A method as defined in claim 32, further comprising:
   permitting packets not belonging to said reserved connection to be forwarded between said first and second ports of said at least one switch if said actual bandwidth is less than a bandwidth capacity associated with said first and second ports by a predetermined margin.
34. A method as defined in claim 32, further comprising:
   detecting if said actual bandwidth is greater than a reserved bandwidth of said reserved connection, said step of forwarding packets belonging to said reserved connection between said first and second ports of said at least one switch being performed in further accordance with said detection.
35. A method as defined in claim 24, further comprising:
   determining whether incoming packets to said at least one switch belong to said reserved connection in accordance with said reservation message; and
   forwarding said incoming packets between said first and second ports in accordance with said determination.
36. An apparatus for establishing a reserved connection between first and second endstations in a network, said apparatus comprising:
   an enterprise control point that identifies a path between said first and second endstations;
   a switch having a first port in packet communication with said first endstation via at least a first link, and a second port in packet communication with said second endstation via at least a second link, said path including said switch;
   a signaling channel coupled between said enterprise control point and said switch, said switch forwarding packets belonging to said reserved connection between said first and second ports along said path with higher priority than packets not belonging to said reserved connection in accordance with a reservation message received from said enterprise control point via said signaling channel when said reserved connection is established.
37. An apparatus as defined in claim 36, wherein said reserved connection has a required bandwidth, said enterprise control point including:
   a network elements registry that lists bandwidth capacities of elements within said network including said first and second endstations, said switch, said first and second ports, and said first and second links;
   a connection controller that determines a capacity of said path in accordance with said network elements registry, said connection controller refusing to establish said reserved connection if said capacity is less than said required bandwidth.
38. An apparatus as defined in claim 37, said apparatus further establishing a second reserved connection between third and fourth endstations in said network, said second reserved connection having a second required bandwidth, at least one of said third and fourth endstations being in packet communication with a common one of said first and second ports of said at least one switch, a second path between said third and fourth endstations including said at least one switch, said apparatus further comprising:
   a current connection list that maintains information regarding all reserved connections in said network, said connection controller determining a second capacity of said second path in accordance with said network elements registry, said connection controller reducing said second capacity of said second path in accordance with said current connection list, said connection controller refusing to establish said second reserved connection if said reduced second capacity is less than said second required bandwidth.
39. An apparatus as defined in claim 37, further comprising:
   a policies list that maintains information regarding rules established for said network, said connection controller reducing said capacity of said path in accordance with said policies list.
40. An apparatus as defined in claim 36, wherein said signaling channel comprises messages including a predetermined identifier to distinguish said messages from other network traffic.
41. An apparatus as defined in claim 40, wherein said enterprise control point includes:
   a signaling interface coupled to said signaling channel, said signaling interface receiving a connection request message from one of said first and second endstations via said signaling channel, said enterprise control point identifying said path in response to said connection request message, said enterprise control point sending said reservation message in accordance with said identified path.
42. An apparatus as defined in claim 37, wherein said signaling channel comprises messages including a predetermined identifier to distinguish said messages from other network traffic, said enterprise control point further including:
   a signaling interface coupled to said signaling channel, said signaling interface receiving a connection request message from one of said first and second endstations via said signaling channel, said enterprise control point identifying said path in response to said connection request message, said connection controller determining said capacity in response to said connection request message, said connection controller sending said reservation message to said switch via said signaling interface in accordance with said path identified by said path enterprise control point, said connection controller sending a connection refused message to said one of said first and second endstations via said signaling interface when said connection controller refuses to establish said reserved connection.
43. An apparatus as defined in claim 36, wherein said enterprise control point further includes:
   a connection monitor that permanently records details concerning said reserved connection.
44. An apparatus as defined in claim 43, wherein said details include one or more of an endstation identifier of one or both of said first and second endstations, a switch identifier of said switch, a bandwidth of said reserved connection, and an elapsed time of said reserved connection.
45. An apparatus as defined in claim 36, wherein said switch includes:
   a connection pairs list that stores identifiers of said first and second endstations involved in said reserved connection;
   a switch table that corresponds said identifiers with said first and second ports;
   an enhanced switch engine coupled to said connection pairs list and said switch table that examines incoming packets to said switch and determines whether said incoming packets belong to said reserved connection in accordance with said connection pairs list, said enhanced switch engine forwarding said incoming packets between said first and second ports in accordance with said determination and said switch table.
46. An apparatus as defined in claim 45, wherein said enhanced switch engine drops incoming packets that do not belong to said reserved connection in accordance with said determination.
47. An apparatus as defined in claim 36, wherein said switch includes:
   a bandwidth monitor that monitors an actual bandwidth consumed by said reserved connection.
48. An apparatus as defined in claim 47, wherein said switch further includes:
   an enhanced switch engine that examines incoming packets to said switch, said bandwidth monitor notifying said enhanced switch engine if said actual bandwidth is less than a bandwidth capacity associated with said first and second ports by a predetermined margin, said enhanced switch engine permitting packets not belonging to said reserved connection to be forwarded between said first and second ports in accordance with said notification.
49. An apparatus as defined in claim 45, wherein said switch further includes:
   a bandwidth monitor that monitors an actual bandwidth consumed by said reserved connection.
50. An apparatus as defined in claim 49, wherein said bandwidth monitor notifies said enhanced switch engine if said actual bandwidth is less than a bandwidth capacity associated with said first and second ports by a predetermined margin, said enhanced switch engine permitting packets not belonging to said reserved connection to be forwarded between said first and second ports in accordance with said notification.
51. An apparatus as defined in claim 49, wherein said bandwidth monitor alerts said enhanced switch engine if said actual bandwidth is greater than a reserved bandwidth of said reserved connection, said enhanced switch engine forwarding packets belonging to said reserved connection between said first and second ports in further accordance with said alert.
52. An apparatus as defined in claim 41, wherein said switch includes:
   a reservation interface that receives said reservation message, and updates a connection pairs list in accordance with said reservation message; and
   an enhanced switch engine coupled to said connection pairs list that examines incoming packets to said switch and determines whether said incoming packets belong to said reserved connection in accordance with said connection pairs list, said enhanced switch engine forwarding said incoming packets between said first and second ports in accordance with said determination.
53. A method of uprading an existing packet-switched network infrastructure for supporting reserved connections, said existing infrastructure including at least one switch, and endstations in packet communication with ports of said switch, said method comprising:
   providing an enterprise control point that maintains a list of paths between said endstations in said network infrastructure, and bandwidth capacities of network elements within said network infrastructure, said network elements including said switch, said endstations, and said ports;
   providing a reserved signaling channel adapted to communicate with said enterprise control point, said reserved signaling channel comprising messages having a predetermined identifier that distinguish said messages from normal network traffic;
   upgrading said switch to communicate with said enterprise control point via said reserved signaling channel, said upgraded switch being responsive to reservation messages from said enterprise control point whereby said upgraded switch causes packets belonging to reserved connections to be switched with higher priority than packets not belonging to reserved connections.
54. A switch adapted for use in a network supporting reserved connections, said network including an enterprise control point that manages said reserved connections and a reserved signaling channel for signaling messages concerning said reserved connections, said reserved connections including a first reserved connection between first and second endstations in said network, said switch comprising:
   a plurality of ports including a first port adapted to provide packet communication with said first endstation and a second port adapted to provide packet communication with said second endstation;
   a reservation interface adapted to receive reservation requests from said enterprise control point via said signaling channel, said reservation requests including a first reservation request corresponding to said first reserved connection;
   a connection pairs list that stores identifiers of endstations involved in reserved connections having paths including said switch, said reservation interface updating said connection pairs list in accordance with said first reservation request;
   a switch table that corresponds said endstation identifiers with ports of said switch;
   an enhanced switch engine that examines said endstation identifiers in packets received at said ports and forwards packets between said ports in accordance with said switch table, said enhanced switch engine further comparing said packet endstation identifiers with said connection pairs list, said enhanced switch engine forwarding packets having endstation identifiers corresponding to said first reservation request between said first and second ports with higher priority than packets having endstation identifiers that do not correspond to said first reservation request.

## Claims

1. A system for reserving a path in a packet-switched network configured to provide at least best-effort packets, comprising:
a centralized control point (126) operable to communicate with the network and to reserve a connection between two or more resources in the network using a signaling channel (130).

2. The system of claim 1, wherein at least one of the two or more resources is a switch.

3. The system of claim 2, wherein the control point (126) is configured to receive request information concerning reserved connections from the switch, to identify at least one path in the network capable of supporting a reserved communication corresponding to the request, and to reserve resources along the identified path.

4. The system of claim 1, wherein the control point (126) comprises path/device discovery function (204) configured to build and update a list of network resources and paths between the resources.

5. The system of claim 4, wherein the control point (126) is configured to initiate and terminate reserved connections between the resources in response to the received request information based on the list of network resources and paths between the resources.

6. The system of claim 1, wherein the control point (126) is operable to establish a reserved connection for a packet by sending a bandwidth reservation to at least one switch that is in the path to provide a reserved bandwidth for the connection.

7. The system of claim 1, wherein the control point (126) is operable to initiate and terminate reserved connections within the network based on a first list of connections within the network and a second list of network elements and paths between the endstations of the network.

8. The system of claim 7, wherein the control point (126) is further operable to determine an overall capacity of a first available path of paths in the second list by determining from a network element registry whether a minimum bandwidth available through each link, switch, and switch port in the first available path is sufficient to fulfill the bandwidth requested for the reserved connection.

9. The system of claim 1, wherein the control point (126) comprises a network interface configured to communicate with a network control system server, wherein the network interface is configured to request reserved connections in a wide area network (WAN) and/or broadband network.

10. A method, comprising:
receiving, at a centralized control point (126), a predetermined reservation protocol packet including a request for a reserved connection; and
communicating with one or more resources, on a packet-switched network configured to provide at least best-effort packets, to reserve a connection using a signaling channel (130).

11. The method of claim 10, wherein at least one of the two or more resources is a switch.

12. The method of claim 10, further comprising:
identifying at least one path in the network capable of supporting a reserved communication corresponding to the request;
wherein the centralized control point (126) is configured to receive the predetermined reservation protocol packet from the switch and to reserve resources along the identified path.

13. The method of claim 10, wherein the control point (126) is operable to initiate and terminate reserved connections within the network based on a first list of connections within the network and a second list of network elements and paths between the endstations of the network.

14. The method of claim 13, further comprising:
determining an overall capacity of a first available path of paths in the second list by determining from a network element registry whether a minimum bandwidth available through each link, switch, and switch port in the first available path is sufficient to fulfill the bandwidth requested for the reserved connection.

15. The method of claim 10, further comprising:
communicating with a network control system server through a network interface;
wherein the network interface is configured to request reserved connections in a wide area network (WAN) and/or broadband network;
wherein the control point (126) comprises the network interface.
